# EUROPÄISCHE PATENTSCHRIFT

(11) **EP 0 488 953 B1**
(45) Veröffentlichungstag und Bekanntmachung des Hinweises auf die Patenterteilung: **05.04.1995**
(21) Anmeldenummer: 91810912.5
(22) Anmeldetag: 25.11.1991
(51) Int. Cl.: B01D 9/00

(54) **Vorrichtung zur Stofftrennung aus einem flüssigen Gemisch durch Kristallisation**
Apparatus for separating material from a liquid mixture by cristallization
Appareil de séparation des substances d'un mélange liquide par cristallisation

(30) Priorität: 27.11.1990 CH 3750/90
(43) Veröffentlichungstag der Anmeldung: 03.06.1992
(73) Patentinhaber: Sulzer Chemtech AG, 8404 Winterthur (CH); SANDVIK PROCESS SYSTEMS GmbH, D-70718 Fellbach (DE)
(72) Erfinder: Ulrich, Joachim, PD Dr.-Ing., W-2800 Bremen 1 (DE); Stepanski, Manfred, Dipl.-Ing., W-2800 Bremen 1 (DE); Oezoguz, Yavus, Dipl.-Ing., W-2870 Delmenhorst (DE)
(74) Vertreter: Riederer, Conrad A., Dr.

(56) Entgegenhaltungen:
- EP-A- 0 167 401
- FR-A- 925 919
- FR-A- 1 220 220

## Beschreibung

Die Erfindung betrifft eine Vorrichtung zur Stofftrennung aus einem flüssigen Gemisch durch Kristallisation, mit einer Kristallisationsfläche, welche durch eine Seite des in einem Neigungswinkel angeordneten Trums eines endlosen Bandes gebildet ist, einer Antriebsvorrichtung für das endlose Band, einer Kühl- oder Heizeinrichtung, mit welcher die andere Seite des genannten Trums durch ein Fluidum gekühlt oder beheizt werden kann, und mindestens einer Beschickungsstelle zum Aufbringen des flüssigen Gemischs auf die Kristallisierfläche.

In der DE-A-17 69 123 wird ein Verfahren und eine Vorrichtung zur Stofftrennung aus einem flüssigen Gemisch durch fraktionierte Kristallisation beschrieben, bei welchem das flüssige Gemisch in turbulenter Strömung über indirekt gekühlte Kristallisierflächen geführt und die abgeschiedene Kristallschicht nach Erreichen einer bestimmten Dicke durch Schmelzen von der Kristallisierfläche abgelöst wird. Beim bekannten Schichtkristallisationsverfahren wird ein Kristallisator verwendet, bei dem die vertikalen gekühlten oder in besonderen Fällen erwärmten Wände durch eine Anzahl vertikaler, parallel geschalteter Rohre gebildet wird. Das flüssige Gemisch fliesst im Inneren der Rohre als Rieselfilm von oben nach unten, während sich auf der Aussenseite der Rohre das Kühlmittel befindet. Das auf der Aussenseite der Kristallisatorrohre als Rieselfilm herabströmende Kühlmittel erzeugt auf der Innenwand aus dem dort herabfliessenden Rieselfilm durch Unterkühlung lokale Kristallisationszentren, die zu einem zusammenhängenden Film wachsen. Von Zeit zu Zeit, wenn die abgeschiedene Kristallschicht eine bestimmte Dicke erreicht hat, wird sie abgeschmolzen. Nachteilig ist dabei, dass das Verfahren notgedrungen diskontinuierlich ist und somit nach jedem Zyklus die ganze Vorrichtung aufgeheizt bzw. abgekühlt werden muss. Dies erfordert einen erheblichen Energieaufwand und verlängert die Zykluszeit. Das beschriebene Verfahren wird meist mehrstufig durchgeführt, da die Reinheit des Kristallisats wegen der hohen Temperaturgradienten und der kleinen Stoffübergangsflächen relativ begrenzt ist. So wird in der zitierten Literaturstelle vorgeschlagen, die Fraktionierung in Zyklen aus jeweils mehreren Stufen derart durchzuführen, dass als Schmelzflüssigkeit für die Kristalle aus der Stufe N-1 die Mutterlauge der Stufe N+1 des vorangegangenen Zyklus verwendet und die Mutterlauge der Stufe N als Schmelzlösung für die Kristalle der Stufe N-2 des nächsten Zyklus benutzt wird. Dieses Verfahren ist als Sulzer-MWB Kristallisationsverfahren bekannt geworden (S.J. Jancic, The Sulzer-MWB Fractional Crystallization System, Sulzer Technical Review, 4/1985).

Durch die US-A-3 603 103 ist ein Verfahren bekannt geworden, bei dem in einem Kratzkühler erzeugte Kristalle in die Mitte einer Kolonne eingespeist werden. In dieser Kolonne werden die Kristalle und das zu reinigende flüssige Gemisch, häufig auch Schmelze genannt, im Gegenstrom geführt. Die Temperatur der Schmelze ist so gesteuert, dass die Kristalle auf ihrem Weg in der Kolonne wachsen. An einem Ende der Kolonne werden die Kristalle aufgeschmolzen. Die aufgeschmolzenen Kristalle werden dann zu einem Teil als Endprodukt entnommen zum andern Teil im Gegenstrom zu den wachsenden Kristallen in der Kolonne rückgeführt. Am anderen Ende der Kolonne wird der hochverschmutzte Rückstand, die sogenannte Mutterlauge, entnommen. Dieses Verfahren hat den Vorteil, dass es kontinuierlich ist. Der Gegenstrom führt zu einem intensiven Stoffaustausch. Nachteilig ist jedoch, dass eine starke axiale Rückvermischung stattfindet, d.h. der Trenneffekt, der durch die Kristallisation erzielt wurde, wird weitgehend wieder dadurch rückgängig gemacht, dass einerseits durch die an den wachsenden Kristallen anhaftende Schmelze mitgeschleppt wird und dass andererseits von der im Gegenstrom fliessenden Schmelze kleine Kristalle, mitgeschleppt werden.

Die EP-A-0 167 401 zeigt eine Kristallisiervorrichtung zum Trennen oder Reinigen von organischen Substanzen. Diese Kristallisiervorrichtung weist drei vertikal angeordnete konzentrische Hohlzylinder auf. Zwischen dem inneren und dem mittleren Hohlzylinder befindet sich ein erster Zwischenraum, der der Aufnahme einer Kühlflüssigkeit dient. Zwischen dem mittleren und dem äusseren Hohlzylinder befindet sich ein zweiter Zwischenraum, der der Aufnahme der zu reinigenden Schmelze dient. Die Aussenseite des mittleren Hohlzylinders bildet die Kristallisierfläche. Der erste Zwischenraum besitzt einen Einlass und einen Auslass für die Kühlflüssigkeit. Der zweite Zwischenraum besitzt einen Einlass für die zu reinigende Schmelze, einen Auslass für das aufgeschmolzene Kristallisat, d.h. das Reinprodukt, und einen Auslass für das unreine Produkt. Diametral gegenüber dem Einlass für die zu reinigende Schmelze befindet sich im zweiten Zwischenraum eine Sperre, die einen Durchfluss von aufgeschmolzenem Kristallisat verhindert. Dem Aufschmelzen des Kristallisats dient eine elektrische Heizung. Im Betrieb der Kristallisiervorrichtung dreht sich die Kristallisierfläche langsam in Richtung des Auslasses für das Reinprodukt. Auf diesem Weg bildet sich eine Kristallschicht auf der Kristallisierfläche. Diese wird dann durch die elektrische Heizung abgeschmolzen. Je nach der Einstellung des Auslassventils, strömt ein mehr oder weniger grosser Teil des aufgeschmolzenen Kristallisats aus dem Auslass, während der Rest im zweiten Zwischenraum in Richtung des Einlasses zurückfliesst und sich dabei mit zu reinigender Schmelze vermischt und weiter gegen den Auslass für das unreine Produkt fliesst. Auf diesem Weg werden auf der Kristallisierfläche weiter Kristalle ausgeschieden. Weil die Schmelze dabei immer weniger bei der Temperatur der Kristallisierfläche kristallisierbares Material enthält, bildet sich in der Nähe des Auslasses für das unreine Produkt kaum noch ein Kristallisat. Beim Auslass für das unreine Produkt ist ein Ventil vorgesehen. Ferner ist eine Pumpe vorhanden, um gegebenenfalls einen Teil des anfallenden unreinen Produkts zur weiteren Kristallisation dem Einlass zuzuführen.

Die bekannte Kristallisiervorrichtung hat insbesondere den Nachteil, dass die im ersten Zwischenraum enthaltene Kühlflüssigkeit über die ganze Kristallisierfläche praktisch die gleiche Temperatur erzeugt. Schon bei einer relativ geringen Schichtdicke des Kristallisats erfolgt daher praktisch keine Kristallisation mehr. Die Ausbeute bleibt daher relativ klein. Ein weiterer Nachteil besteht darin, dass die Rückflussgeschwindigkeit des aufgeschmolzenen Kristallisats wegen der Reibung und der schnelleren Auskühlung am Rande und dem Abfluss eines Teilstromes durch den Auslass nicht überall dieselbe ist. Schliesslich ist auch kein gesteuertes Schwitzen möglich.

Die EP-A-0 063 688 offenbart eine Kristallisiervorrichtung, welche insbesondere für unterkühlende Schmelze verwendet werden kann. Sie besteht aus einem Vorkristallisator und einem waagrecht angeordneten Kühlband und hat zur Aufgabe, ein optimale Keimbildungsgeschwindigkeit und Keimzahl auch ohne Zugabe von zusätzlichem Impfgut im Vorkristallisator zu erreichen. Die Keimbildung wird im Vorkristallisator in einer dünnen Schicht eingeleitet und das Auskristallisieren erfolgt auf dem Kühlband, auf das die vorkristallisierte Schmelze in dicker Schicht aufgetragen wird. Diese Kristallisiervorrichtung ist speziell für die Erstarrung unterkühlter Schmelzen geschaffen, und die Patentanmeldung enthält denn auch keine Anregung, wie mit der gezeigten Vorrichtung eine Stofftrennung durch Kristallisation vorgenommen werden könnte.

Die FR-A-1 220 220 zeigt eine Anzahl von verschiedenen Kristallisiervorrichtungen, von welchen eine eine schräge Kristallisierfläche aufweist. Diese Kristallisierfläche wird durch eine Seite des Trums eines endlosen Bandes gebildet. Unter diesem Trum befindet sich eine Kühlvorrichtung und über dem Trum eine Beschickungsstelle zum Aufbringen des flüssigen Gemischs auf die Kristallisierfläche. Diese Vorrichtung hat den Nachteil, dass der Neigungswinkel der schrägen Kristallisierfläche nicht verstellt werden kann. Nachteilig ist ferner, dass die Kühlvorrichtung kein frei wählbares Temperaturprofil über die Länge der Kristallisierfläche ermöglicht. Es ist auch keine Rückführung von Schmelze vorgesehen, um ein Waschen der Kristallschicht zu ermöglichen.

Es ist Aufgabe der Erfindung, eine Vorrichtung der eingangs erwähnten Gattung zu schaffen, welche es erlaubt, die Fliessgeschwindigkeit und die Bandgeschwindigkeit aufeinander abzustimmen und so den Trennvorgang zu optimieren.

Erfindungsgemäss wird dies mit einer Vorrichtung gemäss Patentanspruch 1 erreicht. Die Vorrichtung ermöglicht einen energetisch vorteilhaften kontinuierlichen Betrieb des Verfahrens. Im Gegensatz zum bekannten Stand der Technik der Schichtkristallisation wird also nicht abwechslungsweise kristallisiert und Kristallisat abgeschmolzen, wobei die Mutterlauge bzw. das aufgeschmolzene Kristallisat nach unten fliesst, sondern es findet ein Gegenstrom statt. Es bewegen sich Kristallisat und zu reinigendes flüssiges Gemisch in entgegengesetzten Richtungen. Die Vorrichtung ermöglicht nicht nur einen kontinuierlichen Betrieb, sondern hat auch den Vorteil, dass bei der Gegenstromführung praktisch keine axiale Rückvermischung stattfindet. Die Stofftrennung ist daher sehr gut. Es sind keine suspendierten Kristalle vorhanden, die vom flüssigen Gemisch mitgeschleppt werden könnten. Im Vergleich zu suspendierten Kristallen ist die Grenzfläche der Kristallschicht gegenüber dem flüssigen Gemisch um mehrere Grössenordnungen kleiner. Daher ist die Menge des durch das Kristallisat mitgeschleppten flüssigen Gemischs sehr klein. Der Transport des flüssigen Gemischs über die Kristallisierfläche wird durch die Schwerkraft bewirkt. Das flüssige Gemisch kann als Rieselfilm nach unten fliessen. Dies ermöglicht eine praktisch gleichmässige Benetzung der Kristallisierfläche bzw. der bereits gebildeten Kristallschicht. Die Einrichtung zur Verstellung des Neigungswinkels ermöglicht es, die Vorrichtung auf einfache Weise den Erfordernissen des Verfahrens anzupassen, die je nach dem zu verarbeitenden Produkt stark variieren können. Durch die Verstellung des Neigungswinkels lässt sich die Verweilzeit des flüssigen Gemischs auf der Kristallisierfläche bzw. Kristallschicht regulieren. Der Neigungswinkel stellt somit eine variable Einflussgrösse dar, um die relative Geschwindigkeit zwischen Kristallschicht und Schmelze zu verändern. Weil die Antriebseinrichtung geschwindigkeitsregelbar ist, kann die Bandgeschwindigkeit auf die Fliessgeschwindigkeit abgestimmt werden. Zusammen mit der Einstellung des Neigungswinkels kann so eine Optimierung des Trennvorgangs erzielt werden.

Vorteilhaft ist die Kühl- oder Heizeinrichtung steuerbar, um der Kristallisierfläche ein Temperaturprofil in Flussrichtung des flüssigen Gemischs aufzuprägen.

Das sogenannte Temperaturprofil besagt, dass die Kühl- oder Heizeinrichtung die Flächenabschnitte der Kristallisierfläche unterschiedlich stark kühlt, je nachdem wo die entsprechenden Flächenabschnitte in Flussrichtung liegen. Dadurch wird eine Kompensation der Isolierung durch die Kristallschicht bewirkt und so über die wirksame Bandlänge eine gleichmässige Kristallwachstumsgeschwindigkeit erzielt.

Es ist auch möglich, mehrere Verfahrensschritte in einer Anlage durchzuführen, indem durch entsprechende Wahl des Temperaturprofils eine aktive Bandlänge für jeden Verfahrensschritt festgelegt wird.

Es kann eine Rückführleitung für Mutterlauge zur ersten Beschickung vorgesehen werden. Dadurch wird eine weitere Kristallisation aus der Mutterlauge erreicht. Es ist aber auch möglich, eine Rückführleitung für Mutterlauge zu einer zweiten Beschickungsstelle vorzusehen, die stromabwärts vor der ersten Beschickungsstelle liegt. In gewissen Fällen ist es zweckmässig, mehrere zweite Beschickungsstellen in Stromrichtung hintereinander anzuordnen. Auch durch diese Massnahmen wird ein weiteres Auskristallisieren des gewünschten Stoffes aus der Mutterlauge erreicht und ermöglicht so eine weitere Verfahrensoptimierung.

Vorteilhaft wird eine Rückführleitung für aufgeschmolzenes Kristallisat zu einer dritten Beschickungsstelle vorgesehen, welche stromaufwärts vor der ersten Beschickungsstelle liegt. Dies ermöglicht es, das auf der Kristallisierfläche befindliche Kristallisat zu waschen. Dadurch wird dem Kristallisat noch anhaftende Mutterlauge und gegebenenfalls auch durch Schwitzen verflüssigtes Kristallisat weggeschwemmt.

Für das Schwitzen können Mittel vorgesehen sein, mit welchen die Unterseite des oberen Trums flussaufwärts von der ersten Beschickungsstelle durch ein Fluidum beheizt werden können. Durch diese oder andere zweckmässige Mittel kann das auf der Kristallisierfläche befindliche Kristallisat zum Schwitzen gebracht werden. Das Schwitzen, d.h. ein partielles Abschmelzen, wird durch entsprechende Wahl der Temperatur erreicht. Der im Kristallisat enthaltene Anteil mit niedrigerem Schmelzpunkt, d.h. der Verunreinigungen darstellenden Anteil, schmilzt. Die aufgeschmolzenen Verunreinigungen treten als Tropfen aus der Kristallschicht. Da sie an Schweisstropfen erinnern, wird dieser Vorgang Schwitzen genannt. Beim vorliegenden Verfahren rinnt der geschmolzene Anteil nach unten und kann dann stromabwärts vermischt mit der Mutterlauge entnommen werden. Ein Vorteil der beschriebenen Ausbildung besteht darin, dass die Kristallisation und der Schwitzvorgang gleichzeitig in der gleichen Vorrichtung durchgeführt werden können, so dass keine zusätzlichen Apparate und kein zusätzlicher Zeitaufwand notwendig sind.

Zweckmässigerweise besitzt die Einrichtung zur Entnahme des Kristallisats einen Abstreifer. Dies hat den Vorteil, dass das Kristallisat schuppenförmig anfällt. Im Gegensatz zum Stand der Technik, wo das Produkt flüssig anfällt, sind somit keine zusätzlichen Vorrichtungen zur Verschuppung notwendig.

Eine vorteilhafte Ausführungsform der Erfindung sieht vor, dass das endlose Band, die Kühl- oder Heizeinrichtung und die Beschickungsstelle oder -stellen mit einem Gestell um eine Achse schwenkbar sind. Dies hat den Vorteil, dass bei einer Verstellung der Neigung der Kristallisationsfläche grundsätzlich keine weiteren Teile der Vorrichtung nachjustiert werden müssen.

Es ist vorteilhaft, wenn die jeweilige Beschickungsstelle auf einem Schlitten auf einer parallel zum oberen Trum angeordneten Schiene verschiebbar ist. Dies ermöglicht eine einfache Verstellung der Beschickungsstelle und schafft so eine Wahlmöglichkeit für die jeweilige Länge der aktiven Kristallisations-, Wasch- und Schwitzfläche. Diese Verstellung kann auch während des Betriebs der Vorrichtung vorgenommen werden. Durch die Wahl der Länge der aktiven Zone und die Wahl des Temperaturprofils wird es sogar möglich, das Kristallisationsverfahren mehrstufig in einer Anlage zu fahren.

Die Erfindung betrifft auch die Verwendung der Vorrichtung für das Sulzer-MWB-Verfahren. Auch diese Verwendung hat den Vorteil, dass eine mehrstufige Kristallisation mit einer einzigen Kristallisiervorrichtung durchgeführt werden kann.

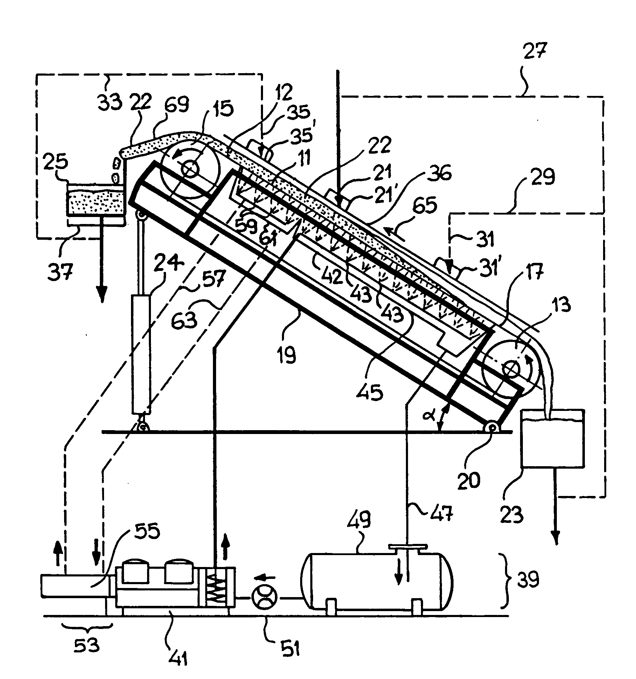

Ein Ausführungsbeispiel der Erfindung wird nun unter Bezugnahme auf die Zeichnung beschrieben.

Die in der Zeichnung schematisch dargestellte Vorrichtung zur kontinuierlichen gerichteten Kristallisation weist eine endlose Kristallisierfläche 11 auf. Beim gezeigten Ausführungsbeispiel wird die Kristallisierfläche 11 durch die Oberseite eines endlosen Bandes 12 gebildet, welches über eine untere Umlenkrolle 13 und eine obere Umlenkrolle 15 geführt ist. Zu einem gegebenen Moment ist lediglich die Oberseite des oberen Trums 17 als Kristallisierfläche 11 im Einsatz. Das endlose Band 12 ist vorzugsweise ein Metallband, z.B. ein Stahlband. Es kommen aber auch andere Materialien in Betracht, wenn sie eine genügende Wärmeleitfähigkeit besitzen. Durch eine nicht eingezeichnete Antriebseinrichtung erfolgt der Antrieb einer Umlenkrolle 13, 15 in Pfeilrichtung. Die Umlenkrollen 13, 15 sind in einem Gestell 19 gelagert, welches um die Achse 20 verschwenkbar ist, um den Neigungswinkel alpha einzustellen. Als Verstelleinrichtung 24 kann z.B. ein hydraulischer Zylinder dienen. Dadurch, dass das obere Trum 17 in einem Neigungswinkel angeordnet ist, kann die Schwerkraft zur Förderung des flüssigen Gemischs auf der Kristallisierfläche 11 benützt werden.

Mit dem Bezugszeichen 21 ist eine erste Beschickungsstelle bezeichnet, über welche das flüssige Gemisch auf die Kristallisierfläche 11 aufgebracht werden kann. Diese Beschickungsstelle 21 befindet sich ungefähr in der Mitte oder oberhalb der Mitte des Trums 17.

Mit dem Bezugszeichen 23 ist ein Behälter für die Mutterlauge und mit dem Bezugszeichen 25 ist ein Behälter für das Kristallisat bezeichnet. Vom Behälter 23 führt eine Rückführleitung 27 zur ersten Beschickungsstelle 21 und/oder eine Rückführleitung 29 zu einer zweiten Beschickungsstelle 31. Die zweite Beschickungsstelle 31 liegt stromabwärts von der ersten Beschickungsstelle 21 etwa im unteren Viertel des Trums 17. Vom Behälter 25 führt eine Rückführleitung 33 zu einer dritten Beschickungsstelle 35, welche stromaufwärts von der ersten Beschickungsstelle 21 angeordnet ist. Jede Beschickungsstelle 21, 31, 35 ist auf einem Schlitten 21′, 31′, 35′ auf einer Schiene 36 verschiebbar. Die Beschickungsstellen können somit entlang der Kristallisierfläche 11 verschoben werden. Die Heizeinrichtung 37 dient zum Schmelzen des Kristallisats im Behälter 25, um eine Rückführung von Kristallisat über die Rückführleitung 33 zu ermöglichen. Die Kühlvorrichtung 39 besteht im wesentlichen aus der Kältemaschine 41, der Leitung 42 mit einer Vielzahl von Düsen 43, der Auffangwanne 45, der Rückführleitung 47, dem Tank 49 für Kühlflüssigkeit und der Pumpe 51. Mittels der Düsen 43 kann die Unterseite des oberen Trums 17 durch ein Fluidum, z.B. Wasser, gekühlt werden. Wenn der Schmelzpunkt des Kristallisats über der Umgebungstemperatur liegt, kann natürlich anstelle einer Kühlung auch eine Heizung erfolgen.

Die Kühlung des Trums 17 auf der Unterseite kann durch entsprechende Steuerung der Temperatur bzw. Menge des Kühlmittels an der jeweiligen Einsatzstelle, der jeweiligen Düse oder Düsen 43, so gestaltet werden, das ein entsprechendes Temperaturprofil der Kristallisierfläche 11 aufgeprägt wird. Dies könnte beispielsweise dazu benützt werden, die durch die Kristallschicht 22 bewirkte Wärmeisolation zu kompensieren. Ein Temperaturprofil ermöglicht unabhängig von der Massenbilanz die Steuerung der Energiebilanz.

Eine Heizvorrichtung 53 ist vorgesehen, mit welcher die Unterseite des oberen Trums 17 flussaufwärts von der ersten Beschickungsstelle 21 durch eine Fluidum beheizt werden kann, um das Kristallisat zum Schwitzen zu bringen. zu diesem Zweck kann die Abwärme der Kältemaschine 41 benützt werden. Durch diese Abwärme wird ein Tank beheizt, von welchem das Heizmedium über die Leitung 57 den Düsen 59 zugeführt wird, welche das Heizmedium gegen die Unterseite des oberen Trums 17 lenken. Ueber die Wanne 61 und die Leitung 63 kann das Heizmedium wieder in den Tank 55 zurückfliessen.

Im Betrieb der Vorrichtung bewegt sich das Trum 17 in Richtung des Pfeils 65, wobei das durch Kristallisation zu fraktionierende flüssige Gemisch bei der Beschickungsstelle 21 auf die Kristallisierfläche 11 aufgebracht wird. Das flüssige Gemisch auf der Kristallisierfläche 11 eine Kristallschicht 22 ausbildet, die mit dem Band 12 nach oben bewegt wird. Die von der kristallisierbaren Substanz weitgehend befreite restliche Flüssigkeit, die sogenannte Mutterlauge, fliesst schliesslich unten in den Behälter 23. Gegebenenfalls wird sie über die Leitung 27 und/oder 29 rezirkuliert, um noch weitere kristallisierbare Substanz auszuscheiden. Das Kristallisat wird durch die Erwärmung der Kristallisierfläche 11 im oberen Teil des Trums 17 zum Schwitzen gebracht. Durch einen Abstreifer 69 wird dann das Kristallisat abgestreift, wobei es in den Behälter 25 gelangt. Gegebenenfalls wird mit der Heizeinrichtung 37 aufgeschmolzenes Kristallisat über die Leitung 33 rückgeführt, um das Kristallisat auf der Kristallisierfläche 11 zu waschen, also von etwa noch anhaftender Mutterlauge und/oder Schwitzphase zu befreien.

Es ist möglich, mehrere solcher Vorrichtungen in Serie zu schalten, um eine mehrstufige Kristallisation durchzuführen. Es ist aber auch möglich, mit einer einzigen Kristallisationsvorrichtung gemäss dem Sulzer-MWB-Verfahren eine mehrstufige Kristallisation durchzuführen.

## Patentansprüche

1. Vorrichtung zur Stofftrennung aus einem flüssigen Gemisch durch Kristallisation, mit einer Kristallisierfläche (11), welche durch eine Seite des in einem Neigungswinkel (alpha) angeordneten Trums (17) eines endlosen Bandes (12) gebildet ist, einer Antriebsvorrichtung, um das endlose Band (12) in einer Richtung und einer Geschwindigkeit anzutreiben, dass die Kristallisierfläche (11) mit dem darauf sich bildenden Kristallisat nach oben zu einer Abgabestelle (25) bewegbar ist und das flüssige Gemisch nach unten fliessen kann, wo die gebildete Mutterlauge einer Abgabestelle (23) für die Mutterlauge zuführbar ist, einer Kühl- oder Heizeinrichtung (43), mit welcher die andere Seite des genannten Trums (17) durch ein Fluidum gekühlt werden kann, und mindestens einer im Bereich über der Kühl- oder Heizeinrichtung (43) angeordneten Beschickungsstelle (21) zum Aufbringen des flüssigen Gemischs auf die Kristallisierfläche (11), dadurch gekennzeichnet, dass die Antriebvorrichtung geschwindigkeitsregelbar und dass die Kristallisierfläche (11) durch eine Verstellvorrichtung (24) neigungsverstellbar ist.

2. Vorrichtung nach Anspruch 1, dadurch gekennzeichnet, dass die Kühl- oder Heizeinrichtung (39) steuerbar ist, um der Kristallisierfläche ein Temperaturprofil in Flussrichtung des flüssigen Gemischs aufzuprägen.

3. Vorrichtung nach Anspruch 1 oder 2, dadurch gekennzeichnet, dass eine Rückführleitung (27) für Mutterlauge zur ersten Beschickungsstelle (21) vorgesehen ist.

4. Vorrichtung, nach einem der Ansprüche 1 bis 3, dadurch gekennzeichnet, dass eine Rückführleitung (29) für Mutterlauge zu einer zweiten Beschickungsstelle (31) vorgesehen ist, welche stromabwärts von der ersten Beschickungsstelle (21) angeordnet ist.

5. Vorrichtung nach Anspruch 4, dadurch gekennzeichnet, dass mehrere zweite Beschickungsstellen (31) in Strömungsrichtung hintereinander angeordnet sind.

6. Vorrichtung nach einem der Ansprüche 1 bis 5, dadurch gekennzeichnet, dass eine Rückführleitung (33) für Kristallisat zu einer dritten Beschickungsstelle (35) vorgesehen ist, welche stromaufwärts von der ersten Beschickungsstelle (21) liegt.

7. Vorrichtung nach einem der Ansprüche 1 bis 6, dadurch gekennzeichnet, dass für das Schwitzen Mittel (59) vorgesehen sind, mit welchen die Unterseite des oberen Trums (17) flussaufwärts von der ersten Beschickungsstelle (21) durch ein Fluidum beheizt werden kann.

8. Vorrichtung nach einem der Ansprüche 1 bis 7, dadurch gekennzeichnet, dass sie einen Abstreifer (69) zur Entnahme des Kristallisats aufweist.

9. Vorrichtung nach einem der Ansprüche 1 bis 8, dadurch gekennzeichnet, dass das endlose Band (12), die Kühl- oder Heizeinrichtung (39) und die Beschickungsstelle oder -stellen (21, 31, 35) mit einem Gestell (19) um eine Achse (20) schwenkbar sind.

10. Vorrichtung nach einem der Ansprüche 1 bis 9, dadurch gekennzeichnet, dass die jeweilige Beschickungsstelle (21, 31, 35) auf einem Schlitten (21', 31', 35') auf einer parallel zum oberen Trum (17) des Bandes (12) angeordneten Schiene (36) verschiebbar ist.

11. Verwendung der Vorrichtung gemäss einem der Ansprüche 1 bis 10 für ein mehrstufiges Verfahren.

12. Verwendung nach Anspruch 11, dadurch gekennzeichnet, dass durch ein Temperaturprofil die aktive Bandlänge für jede Stufe festgelegt wird.

## Claims

1. Apparatus for separating substances from a liquid mixture by crystallisation, comprising a crystallisation surface (11) formed by one side of a run (17) of an endless belt (12), such run being disposed at an angle of inclination (α), a drive mechanism for driving the endless belt (12) in a direction and at a speed such that the crystallisation surface (11) together with the crystallised material forming thereon is movable upwards to a delivery station (25) and the liquid mixture can flow down, where the resulting mother liquor can be fed to a delivery station (23) for the same, a cooling or heating means (43) whereby the other side of the said run (17) can be cooled by a fluid, and at least one charging station (21) disposed in the zone above the cooling or heating means (43) for applying the liquid mixture to the crystallisation surface (11), characterised in that the drive mechanism is speed-controllable and in that the crystallisation surface (11) is adjustable in respect of inclination by an adjustment means (24).

2. Apparatus according to claim 1, characterised in that the cooling or heating means (39) is controllable in order to impose on the crystallisation surface a temperature profile in the direction of flow of the liquid mixture.

3. Apparatus according to claim 1 or 2, characterised in that a recycling conduit (27) is provided for recycling mother liquor to the first charging station (21).

4. Apparatus according to any one of claims 1 to 3, characterised in that a recycling conduit (29) is provided for recycling mother liquor to a second charging station (31) disposed downstream of the first charging station (21).

5. Apparatus according to claim 4, characterised in that a plurality of second charging stations (31) are disposed successively in the direction of flow.

6. Apparatus according to any one of claims 1 to 5, characterised in that a recycling conduit (33) is provided for recycling crystallised material to a third charging station (35) situated upstream of the first charging station (21).

7. Apparatus according to any one of claims 1 to 6, characterised in that for sweating purposes means (59) are provided whereby the underside of the top run (17) can be heated by a fluid upstream of the first charging station (21).

8. Apparatus according to any one of claims 1 to 7, characterised in that it comprises a wiper (69) to remove the crystallised material.

9. Apparatus according to any one of claims 1 to 8, characterised in that the endless belt (12), the cooling or heating means (39) and the charging station or stations (21, 31, 35) are pivotable with a frame (19) about an axis (20).

10. Apparatus according to any one of claims 1 to 9, characterised in that the respective charging stations (21, 31, 35) are displaceable on a carriage (21', 31', 35') on a rail (36) disposed parallel to the top run (17) of the belt (12).

11. Use of the apparatus according to any one of claims 1 to 10 for a multi-stage process.

12. Use according to claim 11, characterised in that the active belt length for each stage is determined by a temperature profile.

## Revendications

1. Dispositif pour la séparation de substances d'un mélange liquide par cristallisation, comprenant une surface de cristallisation (11) qui est constituée par une face du brin (17), disposé avec un angle d'inclinaison (α), d'une bande sans fin (12), un dispositif d'entraînement pour entraîner la bande sans fin (12) dans une direction et à une vitesse telles que la surface de cristallisation (11) avec le produit de cristallisation qui se forme sur elle puisse être déplacée de bas en haut vers un point de déchargement (25) et que le melange liquide puisse s'écouler vers le bas, où la liqueur mère formée peut être dirigée vers un point de déchargement (23) pour la liqueur mère, un dispositif de refroidissement ou de chauffage (43) par lequel l'autre face dudit brin (17) peut être refroidie par un fluide, et au moins un point de chargement (21) disposé dans la region située au-dessus du dispositif de refroidissement ou de chauffage (43) pour déposer le mélange liquide sur la surface de cristallisation (11), caractérisé en ce que le dispositif d'entraînement est un dispositif a vitesse réglable et en ce que l'inclinaison de la surface de cristallisation (11) est réglable au moyen d'un dispositif de réglage (24).

2. Dispositif selon la revendication 1, caractérisé en ce que le système de refroidissement ou de chauffage (39) peut être commande de façon à communiquer à la surface de cristallisation un profil de température dans la direction de déplacement du mélange liquide.

3. Dispositif selon la revendication 1 ou 2, caractérisé en ce qu'une conduite de retour (27) est prévue pour la liqueur mère vers le premier point de chargement (21).

4. Dispositif selon l'une quelconque des revendications 1 à 3, caractérise en ce qu'une conduite de retour (29) est prévue pour la liqueur mère vers un second point de chargement (31) qui est situé en aval du premier point de chargement (21).

5. Dispositif selon la revendication 4, caractérisé en ce que plusieurs seconds points de chargement (31) sont disposés à la suite l'un de l'autre dans la direction d'écoulement.

6. Dispositif selon l'une quelconque des revendications 1 à 5, caractérise en ce qu'il est prévu une conduite de retour (33) pour du produit de cristallisation vers un troisième point de chargement (35) qui est situé en amont au premier point de chargement (21).

7. Dispositif selon l'une quelconque des revendications 1 à 6, caractérise en ce qu'il est prévu, pour le liquide de suintement, des moyens (59) par lesquels la face inférieure du brin supérieur (17) peut être chauffée par un fluide en amont du premier point de chargement (21).

8. Dispositif selon l'une quelconque des revendications 1 à 7, caractérise en ce qu'il comporte un racloir (69) pour enlever le produit de cristallisation.

9. Dispositif selon l'une quelconque des revendications 1 à 8, caractérise en ce que la bande sans fin (12), le dispositif de refroidissement ou de chauffage (39) et le point ou les points de chargement (21, 31, 35) peuvent pivoter, avec un chassis (19), autour d'un axe (20).

10. Dispositif selon l'une quelconque des revendications 1 à 9, caractérisé en ce que chacun des points de chargement (21, 31, 35) peut être déplacé, sur un chariot (21', 31', 35'), sur un rail (36) qui est disposé parallèlement au brin supérieur (17) de la bande (12).

11. Utilisation du dispositif selon l'une quelconque des revendications 1 à 10 pour un procédé en plusieurs étapes.

12. Utilisation selon la revendication 11, caractérisée en ce que la longueur de bande active pour chaque étape est déterminée par un profil de température.
